# FASCICULE DE BREVET EUROPEEN

(11) **EP 3 325 920 B1**
(45) Date de publication et mention de la délivrance du brevet: **11.03.2020**
(21) Numéro de dépôt: 16753950.1
(22) Date de dépôt: 21.07.2016
(51) Int. Cl.: G01C 21/36

(54) **PROCEDE ET DISPOSITIF POUR THEMATISER UN ITINERAIRE PARCOURU PAR UN VEHICULE**
VERFAHREN UND VORRICHTUNG ZUR VERGABE EINES THEMAS FÜR EINE VON EINEM FAHRZEUG AUFGENOMMENE ROUTE
METHOD AND DEVICE FOR GIVING A THEME TO A ROUTE TAKEN BY A VEHICLE

(30) Priorité: 24.07.2015 FR 1557072
(43) Date de publication de la demande: 30.05.2018
(73) Titulaire: PSA AUTOMOBILES S.A., 78300 Poissy (FR); Centre National de la Recherche Scientifique, 75794 Paris Cedex 16 (FR); Sorbonne Université, 75006 Paris (FR)
(72) Inventeur: TAUPIN, Philippe, 78400 Chatou (FR); LALIRON, Anne, 78760 Jouars Pontchartrain (FR); POLACK, Jean-Dominique, 75011 Paris (FR); BERTHELOT-GUIET, Karine, 91540 Mennecy (FR)
(74) Mandataire: Jeannin, Laurent Jean-Pierre
(86) Numéro de dépôt international: PCT/FR2016/051908
(87) Numéro de publication internationale: WO 2017/017358

(56) Documents cités:
- EP-A1- 2 172 746
- WO-A1-2007/109044
- WO-A1-2013/045753
- US-A1- 2014 136 100

## Description

L'invention concerne le domaine de l'info-divertissement à bord des véhicules et, en particulier la thématisation d'un itinéraire parcouru par un véhicule.

La multiplication des aides à la conduite et, en particulier, les fonctions de conduite autonome libèrent le conducteur de sa tâche de conduite.

Les attentes des clients automobiles deviennent des attentes d'occupation du temps de navigation. Les conducteurs recherchent de nouvelles expériences de navigation, notamment en milieu urbain, qui leur apportent plaisir de conduire et bien-être.

Le véhicule autonome et connecté transforme l'automobile en lieu propice à l'émission et à la réception de contenus multimédias.

On connaît par le document FR2743168 un équipement informatique du type multimédia pour la diffusion automatique d'animations multimédia, par exemple d'animations touristiques dans le cadre d'un voyage effectué à bord d'un véhicule. Cet équipement a notamment inconvénient de nécessiter d'emprunter un itinéraire préétabli pour profiter d'un contenu multimédia. Ce contenu multimédia n'est pas personnalisable à bord du véhicule. Cela aboutit à la diffusion d'un contenu standardisé et relativement identique pour chaque individu et chaque trajet.

On connait par le document US20140136100 un système et un procédé de guide touristique automatisés perfectionnés, destinés à être exécutés sur des dispositifs informatisés mobiles, tels que des dispositifs de véhicule équipés d'un téléphone intelligent et d'un GPS, conçus pour mieux imiter la capacité naturelle de guides touristiques humains à personnaliser des guides touristiques selon des variations d'intérêts et de préférences d'utilisateur, et des itinéraires touristiques, lesquels système et procédé fournissent des transitions plus naturelles entre différentes histoires touristiques, et gèrent de manière plus réaliste les régions géographiques d'intérêt qui sont visibles par l'utilisateur.

On connait par le document EP2172746 un appareil pour la fourniture d'accès à un élément de média en fonction au moins d'une partie de trajet comprenant un processeur. Le processeur peut être configuré pour recevoir une position de départ d'un dispositif mobile. Le processeur peut également être configuré pour recevoir un trajet. A cet effet, le trajet peut avoir été déterminé en fonction au moins en partie de points d'intérêt et de la position de départ. Le processeur peut également être configuré pour fournir un accès à un élément de média si une position courante du dispositif mobile reste sur le trajet.

On connait par le document WO2013/045753 une approche pour générer un ou plusieurs itinéraires de déplacement sur la base d'informations d'expérience. Une plateforme d'acheminement basée sur une expérience détermine une requête d'informations d'acheminement, la requête spécifiant un ou plusieurs types d'expériences pour générer les informations d'acheminement. La plateforme traite ensuite la requête pour déterminer des informations d'expérience associées à au moins une destination, à au moins une origine, à au moins un point d'intérêt, à au moins un itinéraire, ou à une combinaison de ceux-ci sur la base, au moins en partie, du ou des types d'expériences. Des informations d'acheminement sont amenées à être générées sur la base, au moins en partie, des informations d'expérience.

On connait par le document WO2007109044 un système dans lequel des supports peuvent être présentés en fonction d'un emplacement associé à la présentation de ces supports (par exemple, l'emplacement physique d'un dispositif destiné à présenter des supports). La présentation de supports peut être efficacement commandée pour présenter automatiquement un premier contenu de support (par exemple une liste de chansons, un album) selon un premier ensemble d'attributs ou de paramètres de présentation de supports (par exemple, un volume associé à une présentation de support audible) à un premier emplacement, tandis qu'un second contenu de support est automatiquement présenté, selon un second ensemble d'attributs ou de paramètres de présentation de support, lorsque l'emplacement actuel est remplacé par un second emplacement.

L'invention a donc pour but de remédier au problème précité en proposant un procédé et un dispositif permettant d'agrémenter n'importe quel itinéraire.

Elle propose plus précisément à cet effet un procédé pour thématiser un itinéraire parcouru par un véhicule selon la revendication 1.

L'invention permet de thématiser un itinéraire, c'est-à-dire, d'associer un thème d'ambiance extérieure sélectionné par le conducteur du véhicule à un itinéraire.

L'invention permet de sélectionner, le long d'un itinéraire donné (sans le modifier) les lieux les plus appropriés pour restituer une expérience sélectionnée par un utilisateur. L'invention permet aussi de restituer les différentes étapes (ou jalons) d'une expérience lors du passage du véhicule à proximité des lieux sélectionnés.

La restitution d'une expérience résulte de la combinaison de deux choix effectué par l'utilisateur un itinéraire et une expérience d'ambiance thématisée. Le croisement de ces deux choix conduit à la création d'une restitution d'une expérience non standardisée.

Avantageusement, les jalons d'une expérience étant ordonnés, les lieux sont sélectionnés de sorte que l'ordre de diffusion des média associés aux lieux est identique à l'ordre des jalons de l'expérience sélectionnée.

Lorsque l'expérience est relative à un récit, comportant une trame narrative, l'ordre dans lequel se déroulent les jalons est particulièrement important. Cette caractéristique permet de respecter la trame narrative et le schéma actantiel d'un récit lors de la restitution dans le véhicule.

Selon l'invention, chaque lieu de la base de lieux étant associé à au moins un mot-clé et à une information de géolocalisation, chaque expérience étant associée à au moins un mot-clé, la sélection d'un lieu comporte des étapes de:
- Calcul d'une distance entre l'itinéraire du véhicule et les lieux de la base, un lieu étant sélectionné si la distance est inférieure à un premier seuil prédéterminé,
- Comparaison des mots-clés des lieux avec les mots-clés de l'expérience, un lieu étant sélectionné s'il est associé à au moins un mot clé identique à un des mots-clés de l'expérience.

Avantageusement, le procédé pour thématiser un itinéraire comporte en outre une étape de réception d'une nouvelle expérience et en réponse à la réception de la nouvelle expérience, la sélection, pour chaque jalon de la nouvelle expérience, d'un lieu à partir d'une base de données de lieux, de sorte que chacun des lieux est associé à un jalon et est situé à proximité de l'itinéraire restant à parcourir par le véhicule.

Avantageusement, le procédé pour thématiser un itinéraire comporte en outre :
- une étape d'émission d'une demande de confirmation avant la diffusion du média associé au lieu, ladite demande de confirmation étant émise lorsque, la distance calculée est inférieure ou égale à un deuxième seuil prédéterminé.

L'invention concerne aussi un dispositif pour thématiser un itinéraire parcouru par un véhicule selon la revendication 5.

L'invention concerne aussi un véhicule comportant un système de navigation et une interface, caractérisé en ce qu'il comporte en outre un dispositif selon l'invention apte à coopérer avec le système de navigation et l'interface.

L'invention concerne aussi un système pour thématiser un itinéraire, caractérisé en ce qu'il comporte un véhicule, une base de données d'expériences et une base de données de lieux, le véhicule comportant un dispositif pour thématiser un itinéraire, selon l'invention apte à communiquer avec la base de données d'expériences et la base de données de lieux.

D'autres caractéristiques et avantages de l'invention apparaîtront à l'examen de la description détaillée ci-après, et des dessins annexés, sur lesquels:
- la figure 1 illustre une vue schématique d'un système selon l'invention;

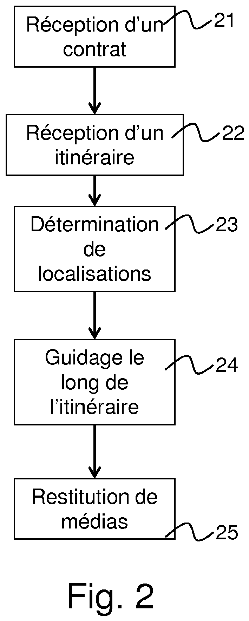

- la figure 2 montre un logigramme illustrant le procédé selon l'invention ;
- la figure 3 montre un exemple d'itinéraire ;
- la figure 4 illustre un exemple d'une table d'une base de lieux ;
- la figure 5 illustre un exemple d'une table d'une base d'expériences.

Les dessins annexés pourront non seulement servir à compléter l'invention, mais aussi contribuer à sa définition, le cas échéant.

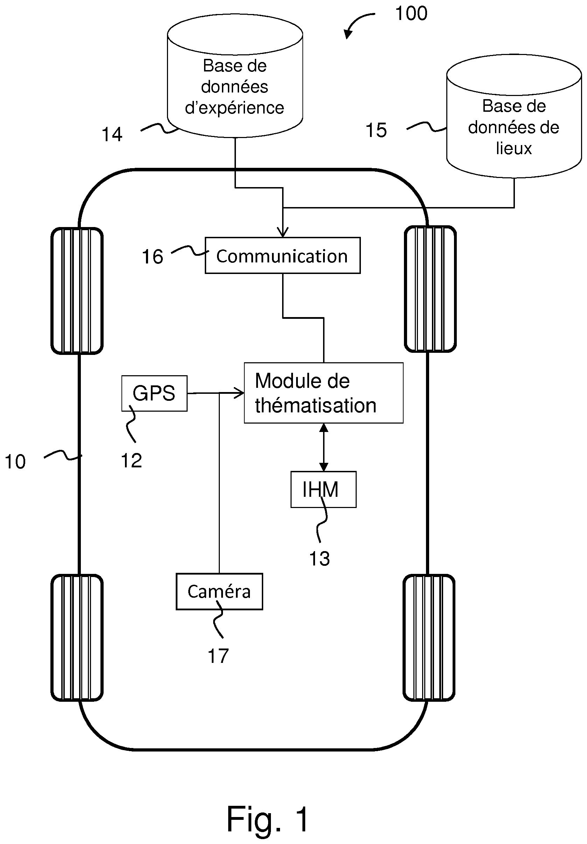

En référence à la figure 1, le système 100 selon l'invention comporte un véhicule 10 communiquant avec base de données d'expériences 14 et une base de données de lieux 15.

Le véhicule 10 comporte un module de thématisation 11, des moyens de transmission sans fil 16, un module de géolocalisation 12 et une interface homme-machine 13.

Le module de géolocalisation 12 permet de déterminer la position géographique du véhicule à un instant donné. Il s'agit, par exemple, d'un module de géolocalisation par satellite type GPS (pour Global Positioning System).

L'interface homme-machine 13 (ou IHM) comporte par exemple un écran embarqué dans l'habitacle du véhicule 10, un système de vision tête haute (ou VTH) permettant de projeter l'image sur un vitrage du véhicule 10 ou tout autre système permettant de restituer à un utilisateur des images ou des vidéos.

De façon avantageuse, l'IHM 13 comporte en outre un système physique d'incrustation d'image en temps réel de type « broadcast » permettant d'insérer une scène thématisée dans la scène de navigation réelle en temps réel. Une scène thématisée est ainsi superposée ou juxtaposée à la scène visionnée par le conducteur en fonction de son déplacement et de son parcours de navigation. Une variante est d'utiliser un verre stratifié ou un papier numérique comme support de projection tout en permettant la translucidité de l'image.

Les moyens de transmission sans fil 16 permettent l'émission et la réception de données depuis et vers l'extérieur du véhicule 10 par l'intermédiaire d'une liaison sans fil. La liaison de données est par exemple de type Wifi, liaison pour téléphonie cellulaire (3G, 4G), Lifi (pour Light Fidelity) ou tout autre type de liaisons sans fils permettant l'émission de données vers un serveur débarqué ou vers un autre véhicule.

Le module de thématisation 11 d'un itinéraire parcouru par un véhicule comporte :
- des moyens de réception d'une expérience provenant de la base 14 d'expériences prédéfinies, ladite expérience étant associée à une pluralité d'étapes,
- des moyens de réception d'un itinéraire provenant du système de navigation 12 du véhicule,
- des moyens de sélection, pour chaque jalon de ladite expérience, d'un lieu à partir d'une base de données 15 de lieux, de sorte que chacun des lieux est associé à un jalon de ladite expérience et est situé à proximité de l'itinéraire,
- des moyens de réception d'informations de géolocalisation, provenant du système de navigation 12, pendant le parcours du véhicule le long de l'itinéraire,
- des moyens de commande de la diffusion, par une interface 13 du véhicule, d'au moins un média associé au lieu sélectionné et à l'expérience reçue, ledit média étant diffusé si les informations de géolocalisation coïncident avec un lieu sélectionné.

De façon avantageuse, le module de thématisation 11 comporte aussi un mélangeur permettant d'incruster des images virtuelles dans des images de la scène réelle (autrement dit, ce qui est perçu par le conducteur). Le mélangeur permet de réaliser des d'incrustations en luminance, des incrustations de motifs et des incrustations chromatiques. Le mélangeur permet de créer un environnement et une ambiance de navigation thématisée qui vient compléter, ou se substituer à l'environnement et l'ambiance réelle. Il permet de réaliser des transitions entre une ambiance réelle et une ambiance thématisée, de superposer de la vidéo en direct, des titres, des éléments graphiques et des animations sur des arrière-plans constitués de vidéos en direct ou d'éléments graphiques de la scène de navigation.

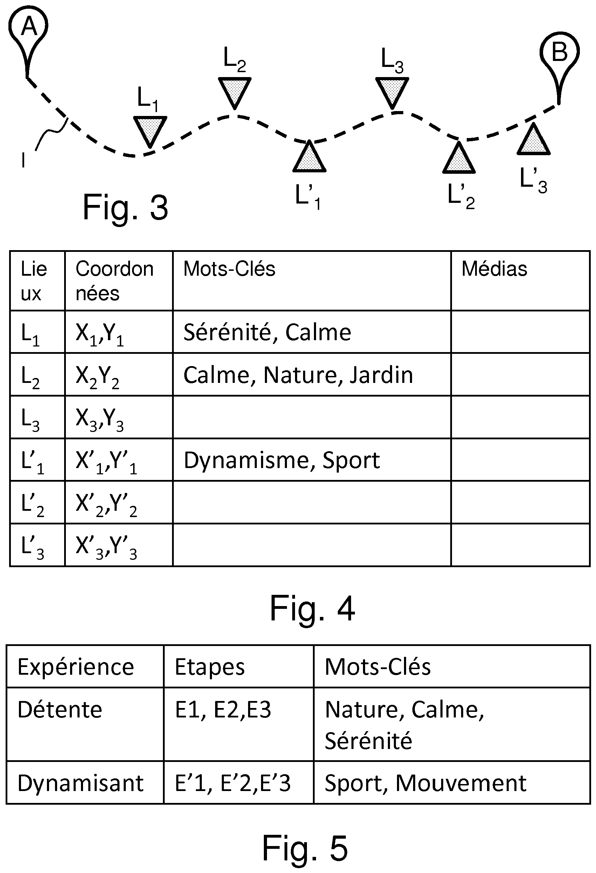

La base de données d'expériences 14 comporte une pluralité d'expériences. La figure 5 montre un exemple d'une table stockée dans une base d'expériences 14. Chaque expérience comporte un titre, une pluralité d'étapes (aussi appelées jalons) et des mots clés. Dans l'exemple, la base 14 comporte deux expériences intitulées : « Bien-être » et « Dynamisant ».

Chaque expérience est associée à une pluralité d'étapes et à au moins un mot clé. L'expérience « Bien-être » est associée à trois étapes E1, E2 et E3 et à trois mots clés Nature, Calme et Sérénité.

Les étapes sont définies par une émission et une réception, par les occupants du véhicule, de stimuli sensoriels, thématisant l'ambiance extérieure au cockpit et perçues par les sens des dits occupants ici entendus comme des capteurs humains.

Le choix d'une expérience (aussi appelé contrat) par l'utilisateur entraîne le choix de valeurs (exemple le niveau de bien-être) à l'issue d'un parcours qualifiant et d'un programme de projections d'images géolocalisées à exécuter modifiant tout ou partie de l'ambiance extérieure au véhicule (ambiance urbaine).

L'expérience « Bien-être » comporte trois étapes qualifiantes E1, E2 et E3 :
- E1, la colorisation de l'habitacle du véhicule et/ou des vitres du véhicule de façon à bleuir l'ambiance, associée à un rappel historique d'un lieu ;
- E2, La colorisation associée à musique apaisante ;
- E3, La perception de l'ambiance extérieure à l'habitacle du véhicule perceptible par les vitraux d'une cathédrale.

La base de données de lieux 15 comporte une pluralité de lieux. La figure 4 montre un exemple d'une table stockée dans une base de lieux 15. Chaque lieu est associé à des coordonnées, permettant de le géolocaliser, et à des mots clés. Dans l'exemple, la base 15 comporte 6 lieux différents L₁, L₂, L₃, L'₁, L'₂ et L'₃. Chacun de ces lieux est associé à des coordonnées, des mots-clés et au moins un média. Un média est par exemple une image, un son ou une vidéo. Le média peut aussi être une indication de couleur à donner à un éclairage intérieur du véhicule 10.

La base de lieux 15 peut être alimentée de plusieurs manières : par exemple par des images thématisées géolocalisées et positionnées sur un plan ou une carte à l'aide de leurs coordonnées géographiques.

Cette opération est réalisée à l'aide d'un terminal capable d'être localisé (grâce à un système de positionnement par satellites et un récepteur GPS par exemple) et de publier (en temps réel ou de façon différée) ses coordonnées géographiques (latitude/longitude). Les positions enregistrées peuvent être stockées au sein du terminal et être extraites postérieurement, ou être transmises en temps réel vers une plateforme logicielle de géolocalisation. La transmission temps réel nécessite un terminal équipé d'un moyen de télécommunication de type GSM, GPRS, UMTS, radio ou satellite lui permettant d'envoyer les positions à des intervalles réguliers. Ceci permet de visualiser la position du terminal au sein d'une carte à travers une plateforme de géolocalisation le plus souvent accessible depuis Internet.

La constitution de la base 15 comporte avantageusement une phase d'indexation. On utilise par exemple un logiciel d'indexation qui permet d'indexer les informations textuelles géocodées et taggées, en thèmes de navigation sur le principe de la structure sémantique des récits suivant une base de récits construites par les utilisateurs, eux-mêmes partageant un contenu d'expériences.

Avantageusement, le véhicule 10 comporte en outre une caméra 17 embarquée permettant de scanner des QR codes (acronyme de Quick Response) apposés sur des monuments ou des bâtiments. Ces QR codes permettent d'obtenir leur image passée ou des informations actuelles sur les monuments ou les bâtiments correspondants.

Le procédé, mis en œuvre par le module de thématisation 11 embarqué à bord du véhicule 10, comporte les étapes suivantes.

Une première étape comporte la réception 21 d'une expérience provenant d'une base 14 d'expériences prédéfinies. En pratique, l'IHM 13 du véhicule présente au conducteur les expériences disponibles dans la base d'expériences 14. Lorsque l'utilisateur sélectionne une de ces expériences, l'IHM 13 commande l'envoi de l'expérience sélectionnée de la base de données d'expérience vers le module de thématisation 11. Dans l'exemple de réalisation présenté, on suppose que deux expériences sont disponibles dans la base 14 : « Bien-être » et « Dynamisant ». On suppose aussi que l'utilisateur choisi l'expérience détente.

Une deuxième étape comporte la réception 22 d'un itinéraire provenant du système de navigation 12 du véhicule 10. Dans l'exemple le module de thématisation reçoit un itinéraire I permettant de rouler du point de départ A au point d'arriver B.

Une troisième étape comporte une sélection 23, pour chaque étape de ladite expérience, d'un lieu à partir d'une base de données 15 de lieux, de sorte que chacun des lieux est associé à une étape et est situé à proximité de l'itinéraire.

La sélection d'un lieu 23 repose sur un premier critère relatif à sa localisation et sur un deuxième critère relatif à sa thématique.

Le premier critère est évalué par exemple en effectuant un calcul d'une distance entre l'itinéraire I du véhicule et les lieux de la base 15. Un lieu est sélectionné si la distance est inférieure à un premier seuil S1 prédéterminé.

Le deuxième critère est évalué par exemple en effectuant une comparaison des mots-clés des lieux avec les mots-clés de l'expérience. Un lieu est sélectionné s'il est associé à au moins un mot clé identique à un des mots-clés associé à l'expérience. De cette façon, on s'assure que le lieu sélectionné est propice à la restitution de l'expérience.

Dans l'exemple, le lieu L1 est sélectionné car il est associé au mot clé « Nature ». L'expérience « Détente » est aussi au mot clé « Nature ».

Avantageusement, les étapes d'une expérience étant ordonnées, les lieux sont sélectionnés de sorte que l'ordre de diffusion des média associés aux lieux est identique à l'ordre des jalons de l'expérience sélectionnée.

Autrement dit, une fois que le lieu L₁ est sélectionné pour restituer l'étape E₁, le lieu sélectionné doit nécessairement être situé en aval du lieu L₁ sur (ou à proximité de) l'itinéraire I. Dans l'exemple, le lieu sélectionné pour l'étape E₂ est le lieu L₂.

Les premières étapes 21 à 23 du procédé selon l'invention se déroulent par exemple avant le démarrage du véhicule 10 pendant que le conducteur prépare son trajet.

Les étapes suivantes 24 et 25 se déroulent pendant une phase de roulage du véhicule au cours de laquelle le véhicule parcourt l'itinéraire I.

Une quatrième étape comporte la réception 24 d'informations de géolocalisation, provenant du système de navigation 12, pendant le parcours du véhicule le long de l'itinéraire, et indiquant une position actuelle du véhicule.

Lorsque les informations de géolocalisation coïncident avec un lieu sélectionné, le module de thématisation émet un signal commandant la diffusion 25, par l'IHM 13 du véhicule 10, d'au moins un média associé au lieu sélectionné et à l'expérience reçue.

Par exemple, lorsque le véhicule 10 se trouve à une position P dont la distance est inférieure à 1 Km du lieu L1, le module de thématisation 11 commande la diffusion d'images sur le parebrise du véhicule et la diffusion d'une musique. Les images et la musique diffusées sont celles associées au lieu L1 dans la base de lieux 15.

De façon préférentielle, le procédé de thématisation selon l'invention comporte aussi :
- une étape d'émission d'une demande de confirmation avant l'étape de diffusion 25 du média associé au lieu. La demande de confirmation est émise lorsque la distance calculée est inférieure ou égale à un seuil prédéterminé.

Selon une variante de réalisation de l'invention, l'utilisateur peut modifier l'expérience qu'il a choisie au court de l'itinéraire. Dans ce cas, le procédé comporte en outre une étape de réception d'une nouvelle expérience (sélectionnée par le conducteur) et en réponse à la réception de la nouvelle expérience, la sélection, pour chaque étape de ladite expérience, d'un lieu à partir de la base de données 15 de lieux, de sorte que chacun des lieux L1', L2', L3' est associé à une étape et est situé à proximité de l'itinéraire I restant à parcourir par le véhicule 10.

On suppose que l'expérience choisie par le conducteur est bien - être. A l'approche du premier lieu L1, le module de thématisation 11 émet une demande de confirmation, et si le conducteur confirme la thématisation alors le module de thématisation 11 commande la diffusion des éléments géolocalisés présents dans la base de lieux (images, sons, vidéo) et répondant au thème de navigation bien - être. Il s'agit par exemple d'une colorisation de l'ambiance urbaine perçue par les occupants, d'une projection d'images en réalité augmentée et d'un habillage de la réalité avec un rappel historique du lieu ou une vision futuriste du lieu.

A l'approche du deuxième lieu L2, le module de thématisation 11 émet une demande de confirmation, et si le conducteur confirme alors le module de thématisation 11 commande la diffusion des éléments géolocalisés présents dans la base de lieux (images, sons, vidéo) et répondant au thème de navigation « Bien-être ».

A l'approche du troisième lieu L3, le module de thématisation 11 émet une demande de confirmation et si confirmation alors diffusion des éléments géolocalisés présents dans la base (images, sons, vidéo) répondant au au thème de navigation « Bien-être ». Il s'agit par exemple de projeter sur les vitrages des kaléidoscopiques se transformant en vitraux suggérant ainsi la méditation.

Le dispositif permet de créer et de projeter des images et des récits sur les vitrages d'une automobile, lors d'un parcours. Les images et récits sont par exemple reçus d'une autre automobile. La restitution des images et récits est asservie à un système de géolocalisation permettant de déclencher une projection en fonction des lieux géolocalisés. Le système est adaptatif et collaboratif, les conducteurs et passagers de véhicules connectés peuvent partager des expériences thématisées qui leur plaisent à l'approche d'un point du parcours.

L'invention permet d'asservir des medias enrichies (ou rich media) présentés sous forme d'images à la détection d'états émotionnels générés par des lieux géolocalisés et d'autre part de transformer les environnements extérieurs urbains visibles depuis l'intérieur du véhicule en images de synthèse substituées aux parties du véhicule et permettant au passager de contempler un environnement différent de telle sorte que son expérience émotionnelle en soit transformée.

Le procédé selon l'invention comprend :
- l'identification de l'état émotionnel des passagers ou, à l'approche d'un point géolocalisé, la détection d'un environnement perturbant cet état,
- l'appel dans une base de données de contenus multimédias permettant de compenser cet état émotionnel négatif,
- la possibilité pour les passagers d'être exposés à ce contenu multimédia depuis l'intérieur de leur véhicule en lieu et place de ce à quoi ils auraient réellement été exposés,

C'est donc l'approche d'un point géolocalisé qui déclenche l'appel de contenus multimédias dans une base de contenus indépendante et générant différents types d'expériences émotionnelles chez l'usager.

Cela permet de déconnecter l'expérience de conduite générée par une navigation à des points d'intérêt réels en remplaçant ces points d'intérêt par des points d'intérêt virtuels stockés dans une base de données pour créer des expériences de conduite extraordinaires.

## Revendications

1. Procédé d'info-divertissement pour thématiser un itinéraire parcouru par un véhicule (10), ledit procédé étant mis en œuvre par un module de thématisation (11) embarqué à bord du véhicule (10) et comportant des étapes de :
- Réception (21) d'un ensemble de données définissant une expérience provenant d'une base de données (14) d'expériences prédéfinies, ladite expérience comportant un titre, une pluralité de jalons et des mots clés, les jalons étant définis par une émission de stimuli sensoriels thématisant l'ambiance extérieure au cockpit du véhicule,
- Réception (22) d'un itinéraire provenant d'un système de navigation (12) du véhicule (10),
- Sélection (23), pour chaque jalon de ladite expérience, d'un lieu à partir d'une base de données (15) de lieux, de sorte que chacun des lieux est associé à un jalon de ladite expérience et est situé à proximité de l'itinéraire, chaque lieu de la base de données (15) de lieux étant associé à au moins un mot-clé et à une information de géolocalisation,
- Réception (24) d'informations de géolocalisation, provenant du système de navigation (12), pendant le parcours du véhicule le long de l'itinéraire, et indiquant une position actuelle du véhicule (10),
- Détermination d'une distance entre la position actuelle du véhicule (10) et un lieu sélectionné, à partir des informations de géolocalisation reçues,
- Lorsque la distance déterminée est inférieure à un premier seuil prédéterminé, alors l'émission d'un signal commandant la diffusion (25), par une interface (13) du véhicule, d'au moins un média associé au lieu sélectionné et à l'expérience reçue,
et dans lequel la sélection (23) d'un lieu comporte les étapes suivantes :
- Calcul d'une distance entre l'itinéraire (I) du véhicule (10) et les lieux de la base de données (15) de lieux, un lieu étant sélectionné si la distance est inférieure à un deuxième seuil (S₁) prédéterminé,
- Comparaison des mots-clés des lieux avec les mots-clés de l'expérience, un lieu étant sélectionné s'il est associé à au moins un mot-clé identique à un des mots-clés de l'expérience.

2. Procédé pour thématiser un itinéraire selon la revendication 1, **caractérisé en ce que**, les jalons d'une expérience étant ordonnés, les lieux sont sélectionnés de sorte que l'ordre de diffusion des média associés aux lieux est identique à l'ordre des jalons de l'expérience reçue.

3. Procédé pour thématiser un itinéraire selon l'une des revendications précédentes, **caractérisé en ce qu'**il comporte en outre une étape de réception d'une nouvelle expérience et en réponse à la réception de la nouvelle expérience, la sélection, pour chaque jalon de la nouvelle expérience, d'un lieu à partir d'une base de données (15) de lieux, de sorte que chacun des lieux (L1',L2',L3') est associé à un jalon et est situé à proximité de l'itinéraire (I) restant à parcourir par le véhicule (10).

4. Procédé pour thématiser un itinéraire selon l'une des revendications précédentes, **caractérisé en ce qu'**il comporte en outre :
- une étape d'émission d'une demande de confirmation avant la diffusion (25) du média associé au lieu, ladite demande de confirmation étant émise lorsque, la distance calculée est inférieure ou égale à un troisième seuil (S2) prédéterminé.

5. Dispositif pour thématiser un itinéraire parcouru par un véhicule (10), **caractérisé en ce qu'**il comporte un module de thématisation (11) embarqué à bord du véhicule (10) et comportant :
- des moyens de réception d'une expérience provenant d'une base de données (14) d'expériences prédéfinies, ladite expérience comportant un titre, une pluralité de jalons et des mots clés, les jalons étant définis par une émission de stimuli sensoriels thématisant l'ambiance extérieure au cockpit du véhicule,
- des moyens de réception d'un itinéraire (I) provenant d'un système de navigation (12) du véhicule,
- des moyens de sélection (23), pour chaque jalon de ladite expérience, d'un lieu à partir d'une base de données (15) de lieux, de sorte que chacun des lieux est associé à un jalon de ladite expérience et est situé à proximité de l'itinéraire, chaque lieu de la base de données (15) de lieux étant associé à au moins un mot-clé et à une information de géolocalisation,
- des moyens de réception (24) d'informations de géolocalisation, provenant du système de navigation (12), pendant le parcours du véhicule le long de l'itinéraire, les informations de géolocalisation indiquant une position actuelle du véhicule,
- des moyens de détermination d'une distance entre la position actuelle du véhicule (10) et un lieu sélectionné, à partir des informations de géolocalisation reçues,
- des moyens de commande de la diffusion (25), par une interface (13) du véhicule, d'au moins un média associé au lieu sélectionné et à l'expérience reçue, ledit média étant diffusé lorsque la distance déterminée est inférieure à un seuil prédéterminé,
les moyens de sélection (23) étant configurés pour
- calculer une distance entre l'itinéraire (I) du véhicule (10) et les lieux de la base de données (15) de lieux, un lieu étant sélectionné si la distance est inférieure à un deuxième seuil (S₁) prédéterminé,
- comparer des mots-clés des lieux avec les mots-clés de l'expérience, un lieu étant sélectionné s'il est associé à au moins un mot-clé identique à un des mots-clés de l'expérience.

6. Véhicule (10) comportant un système de navigation (12) et une interface (13), **caractérisé en ce qu'**il comporte en outre un dispositif selon la revendication précédente apte à coopérer avec le système de navigation (12) et l'interface (13).

7. Système pour thématiser un itinéraire (I), **caractérisé en ce qu'**il comporte un véhicule, une base de données d'expériences (14) et une base de données de lieux (15), le véhicule comportant un dispositif pour thématiser un itinéraire (I), selon la revendication 5 apte à communiquer avec la base de données d'expériences (14) et la base de données de lieux (15).

## Patentansprüche

1. Infotainmentverfahren zum Thematisieren einer Route, die von einem Fahrzeug (10) zurückgelegt wird, wobei das Verfahren von einem Bord-Thematisierungsmodul (11) an Bord des Fahrzeugs (10) umgesetzt wird, und folgende Schritte umfasst:
- Empfang (21) einer Einheit von Daten, die eine Erfahrung definieren, die von einer Datenbank (14) vordefinierter Erfahrungen stammen, wobei die Erfahrung einen Titel, eine Vielzahl von Meilensteinen und Schlüsselwörtern umfasst, wobei die Meilensteine durch eine Ausgabe von Sinnesreizen definiert sind, die das Ambiente außerhalb des Fahrzeugcockpits thematisieren,
- Empfang (22) einer Route, die von einem Navigationssystem (12) des Fahrzeugs (10) stammt,
- Auswahl (23) für jeden Meilenstein der Erfahrung eines Orts ausgehend von einer Ortsdatenbank (15) derart, dass jeder der Orte mit einem Meilenstein der Erfahrung assoziiert ist und sich in der Nähe der Route befindet, wobei jeder Ort der Ortsdatenbank (15) mit mindestens einem Schlüsselwort und einer Geolokalisierungsinformation assoziiert ist,
- Empfang (24) von Geolokalisierungsinformationen, die von dem Navigationssystem (12) stammen, während der Strecke des Fahrzeugs entlang der Route, und die eine aktuelle Position des Fahrzeugs (10) angeben,
- Bestimmen einer Entfernung zwischen der aktuellen Position des Fahrzeugs (10) und dem ausgewählten Ort ausgehend von den empfangenen Geolokalisierungsinformationen,
- wenn die bestimmte Entfernung kleiner ist als ein erster vorbestimmter Schwellenwert, Senden eines Signals, das die Verbreitung (25) über eine Schnittstelle (13) des Fahrzeugs mindestens eines Mediums, das mit dem ausgewählten Ort und dem empfangenen Erfahrung assoziiert ist,
und wobei die Auswahl (23) eines Orts die folgenden Schritte umfasst:
- Berechnen einer Entfernung zwischen einer Route (I) des Fahrzeugs (10) und den Orten der Ortsdatenbank (15), wobei ein Ort ausgewählt wird, falls die Entfernung kleiner ist als ein zweiter vorbestimmter Schwellenwert (S₁),
- Vergleich der Schlüsselwörter der Orte mit den Schlüsselwörtern der Erfahrung, wobei ein Ort ausgewählt wird, wenn er mit mindestens einem Schlüsselwort assoziiert ist, das mit einem der Schlüsselwörter der Erfahrung identisch ist.

2. Verfahren zum Thematisieren einer Route nach Anspruch 1, **dadurch gekennzeichnet, dass**, da die Meilensteine einer Erfahrung geordnet sind, die Orte derart ausgewählt werden, dass die Reihenfolge der Verbreitung der Medien, die mit den Orten assoziiert sind, mit der Reihenfolge der Meilensteine der empfangenen Erfahrung identisch sind.

3. Verfahren zum Thematisieren einer Route nach einem der vorstehenden Ansprüche, **dadurch gekennzeichnet, dass** es außerdem einen Schritt des Empfangens einen neuen Erfahrung und als Reaktion auf das Empfangen der neuen Erfahrung die Auswahl für jeden Meilenstein der neuen Erfahrung eines Orts ausgehend von einer Ortsdatenbank (15) derart umfasst, dass jeder der Orte (L1', L2', L3') mit einem Meilenstein assoziiert ist und in der Nähe der Route (I), die das Fahrzeug (10) noch zurückzulegen hat, liegt.

4. Verfahren zum Thematisieren einer Route nach einem der vorstehenden Ansprüche, **dadurch gekennzeichnet, dass** es außerdem Folgendes umfasst:
- einen Sendeschritt einer Bestätigungsanfrage vor der Verbreitung (25) des Mediums, das mit dem Ort assoziiert ist, wobei die Bestätigungsanfrage gesendet wird, wenn die berechnete Entfernung kleiner oder gleich einem dritten vorbestimmten Schwellenwert (S2) ist.

5. Vorrichtung zum Thematisieren einer Route, die von einem Fahrzeug (10) zurückgelegt wird, **dadurch gekennzeichnet, dass** sie ein Bord-Thematisierungsmodul (11) an Bord des Fahrzeuges (10) umfasst, das Folgendes umfasst:
- Mittel zum Empfangen einer Erfahrung, die von einer Datenbank (14) vordefinierter Erfahrungen stammt, wobei die Erfahrung einen Titel, eine Vielzahl von Meilensteinen und Schlüsselwörtern umfasst, wobei die Meilensteine von einem Senden von Sinnesreizen definiert sind, die das Ambiente außerhalb des Cockpits des Fahrzeugs thematisieren,
- Mittel zum Empfangen einer Route (I), die aus einem Navigationssystem (12) des Fahrzeugs stammt,
- Auswahlmittel (23) für jeden Meilenstein der Erfahrung eines Orts ausgehend von einer Ortsdatenbank (15) derart, dass jeder der Orte mit einem Meilenstein der Erfahrung assoziiert ist und sich in der Nähe der Route befindet, wobei jeder Ort der Ortsdatenbank (15) mit mindestens einem Schlüsselwort und einer Geolokalisierungsinformation assoziiert ist,
- Mittel zum Empfangen (24) von Geolokalisierungsinformationen, die von dem Navigationssystem (12) stammen, während der Strecke des Fahrzeugs entlang der Route, wobei die Geolokalisierungsinformationen eine aktuelle Position des Fahrzeugs angeben,
- Mittel zum Bestimmen einer Entfernung zwischen der aktuellen Position des Fahrzeugs (10) und einem ausgewählten Ort, ausgehend von den empfangenen Geolokalisierungsinformationen,
- Mittel zum Befehlen der Verbreitung (25) durch eine Schnittstelle (13) des Fahrzeugs mindestens eines Mediums, das mit dem ausgewählten Ort und dem empfangenen Ereignis assoziiert ist, wobei das Medium verbreitet wird, während die bestimmte Entfernung kleiner ist als ein vorbestimmter Schwellenwert,
wobei die Auswahlmittel (23) konfiguriert sind, um
- eine Entfernung zwischen der Route (I) des Fahrzeugs (10) und den Orten der Ortsdatenbank (15) zu berechnen, wobei ein Ort ausgewählt wird, falls die Entfernung kleiner ist als ein zweiter vorbestimmter Schwellenwert (S₁),
- Schlüsselwörter der Orte mit den Schlüsselwörtern der Erfahrung zu vergleichen, wobei ein Ort ausgewählt wird, falls er mit mindestens einem Schlüsselwort assoziiert ist, das mit einem der Schlüsselwörter der Erfahrung identisch ist.

6. Fahrzeug (10), das ein Navigationssystem (12) und eine Schnittstelle (13) umfasst, **dadurch gekennzeichnet, dass** es außerdem eine Vorrichtung nach dem vorstehenden Anspruch umfasst, die geeignet ist, mit dem Navigationssystem (12) und der Schnittstelle (13) zusammenzuwirken.

7. System zum Thematisieren einer Route (I), **dadurch gekennzeichnet, dass** es ein Fahrzeug, eine Erfahrungsdatenbank (14) und eine Ortsdatenbank (15) umfasst, wobei das Fahrzeug eine Vorrichtung zum Thematisieren einer Route (I) nach Anspruch 5 umfasst, die geeignet ist, um mit der Ereignisdatenbank (14) und der Ortsdatenbank (15) zu kommunizieren.

## Claims

1. An infotainment method for giving a theme to a route taken by a vehicle (10), said method being implemented by a thematization module (11) on board the vehicle (10) and comprising steps of:
- reception (21) of a set of data defining an experience originating from a database (14) of predefined experiences, said experience comprising a title, a plurality of milestones and key words, the milestones being defined by an emission of sensory stimuli giving a theme to the ambience exterior to the cockpit of the vehicle,
- reception (22) of a route originating from a navigation system (12) of the vehicle (10),
- selection (23), for each milestone of said experience, of a place from a database (15) of places, so that each of the places is associated with a milestone of said experience and is situated close to the route, each place of the database (15) of places being associated with at least one key word and with one item of geolocation information,
- reception (24) of items of geolocation information, originating from the navigation system (12), during the travel of the vehicle along the route, and indicating a current position of the vehicle (10),
- determination of a distance between the current position of the vehicle (10) and a selected place, from received items of geolocation information,
- when the determined distance is less than a first predetermined threshold, then emission of a signal commanding the broadcasting (25), via an interface (13) of the vehicle, of at least one medium associated with the selected place and with the received experience,
and in which the selection (23) of a place comprises the following steps:
- calculation of a distance between the route (I) of the vehicle (10) and the places of the database (15) of places, a place being selected if the distance is less than a second predetermined threshold (S₁),
- comparison of the key words of the places with the key words of the experience, a place being selected if it is associated with at least one key word identical to one of the key words of the experience.

2. The method for giving a theme to a route according to Claim 1, **characterized in that**, the milestones of an experience being put in order, the places are selected so that the order of broadcasting of the media associated with the places is identical to the order of the milestones of the received experience.

3. The method for giving a theme to a route according to one of the preceding claims, **characterized in that** it further comprises a step of reception of a new experience and, in response to the reception of the new experience, the selection, for each milestone of the new experience, of a place from a database (15) of places, so that each of the places (L1', L2', L3') is associated with a milestone and is situated close to the route (I) remaining to be taken by the vehicle (10) .

4. The method for giving a theme to a route according to one of the preceding claims, **characterized in that** it further comprises:
- a step of emission of a request for confirmation before the broadcasting (25) of the media associated with the place, said request for confirmation being emitted when the calculated distance is less than or equal to a third predetermined threshold (S2).

5. A device for giving a theme to a route taken by a vehicle (10), **characterized in that** it comprises a thematization module (11) on board the vehicle (10) and comprising:
- means for reception of an experience originating from a database (14) of predefined experiences, said experience comprising a title, a plurality of milestones and key words, the milestones being defined by an emission of sensory stimuli giving a theme to the ambience exterior to the cockpit of the vehicle,
- means for reception of a route (I) originating from a navigation system (12) of the vehicle,
- selection means (23), for each milestone of said experience, of a place from a database (15) of places, so that each of the places is associated with a milestone of the said experience and is situated close to the route, each place of the database (15) of places being associated with at least one key word and with one item of geolocation information,
- reception means (24) of geolocation information, originating from the navigation system (12), during the travel of the vehicle along the route, the geolocation information indicating a current position of the vehicle,
- means for determination of a distance between the current position of the vehicle (10) and a selected place, from the received geolocation information,
- means for commanding the broadcasting (25), via an interface (13) of the vehicle, of at least one medium associated with the selected place and the received experience, said media being broadcast when the determined distance is less than a predetermined threshold,
the selection means (23) being configured for
- calculating a distance between the route (I) of the vehicle (10) and the places of the database (15) of places, a place being selected if the distance is less than a second predetermined threshold S₁),
- comparing key words of the places with key words of the experience, a place being selected if it is associated with at least one key word identical to one of the key words of the experience.

6. A vehicle (10) comprising a navigation system (12) and an interface (13), **characterized in that** it further comprises a device according to the preceding claim able to cooperate with the navigation system (12) and the interface (13).

7. A system for giving a theme to a route (I), **characterized in that** it comprises a vehicle, a database of experiences (14) and a database of places (15), the vehicle comprising the device for giving a theme to a route (I), according to Claim 5, able to communicate with the database of experiences (14) and the database of places (15).
